# EUROPÄISCHE PATENTSCHRIFT

(11) **EP 1 700 684 B1**
(45) Veröffentlichungstag und Bekanntmachung des Hinweises auf die Patenterteilung: **20.06.2012**
(21) Anmeldenummer: 05101891.9
(22) Anmeldetag: 11.03.2005
(51) Int. Cl.: B29C 65/14, B01D 29/11

(54) **Verfahren zur Herstellung einer dichten Verbindung zwischen einem mehrschichtigen Kunststoffmaterial und einem Filtermedium**
Process for producing a tight connection between a multilayer plastic material and a filter medium
Procédé pour réaliser un joint étanche entre un matériau plastique multicouche et un élément filtrant

(43) Veröffentlichungstag der Anmeldung: 13.09.2006
(73) Patentinhaber: MANN+HUMMEL GmbH, 71638 Ludwigsburg (DE)
(72) Erfinder: Rohrmeier, Josef, 84082 Laberweinting (DE); Huber, Matthäus, 94419 Reisbach (DE); Strassenberger, Norbert, 84166 Adlkofen (DE); Amesöder, Dieter, 74321 Bietigheim-Bissingen (DE)

(56) Entgegenhaltungen:
- EP-A- 0 995 535
- EP-A- 1 236 490
- EP-A- 1 438 998
- WO-A-01/87456
- WO-A-02/38244
- DE-A1- 10 211 782
- DE-A1-102004 015 398
- DE-U1- 20 301 787
- US-A1- 2001 000 877

## Beschreibung

### Stand der Technik

Die Erfindung betrifft ein Verfahren zur Herstellung einer dichten Verbindung zwischen einem thermisch schmelzbaren, mehrschichtigen Kunststoffmaterial und einem fluiddurchlässigen Filtermedium nach dem Oberbegriff des Patentanspruches 1. Außerdem betrifft die Erfindung ein Filterelement nach dem Oberbegriff des Patentanspruches 9, welches nach diesem Verfahren hergestellt wird.

Ein Verfahren der eingangs genannten Art ist aus der DE 199 19 289 bekannt. Bei diesem Verfahren enthält die zu erhitzende Schicht des Kunststoffmaterials induktiv erhitzbare Partikel, welche vor dem Fügeprozess induktiv erhitzt werden und somit das Kunststoffmaterial zum Schmelzen bringen.

Nachteilig an diesem Verfahren ist, dass eine induktive Energiequelle bereitgestellt und abgestimmt werden muss. Weiterhin ist es nicht möglich, ein metallfreies Element herzustellen, da induktiv erhitzbare Partikel zwangsweise Metall beinhalten

Aus der deutschen Patentanmeldung DE 10 2004 015 398 A1 ist eine Filteranordnung sowie ein Verfahren zu deren Herstellung bekannt, bei der eine Grundplatte aus Kunststoff durch Anschmelzen, z. B. mittels Infrarotstrahlung, eine Verbindung mit einem Filtermedium eingeht.

### Vorteile der Erfindung

Aufgabe der Erfindung ist es, ein Verfahren zu schaffen, welches ein gezieltes, selektives Aufschmelzen der Fügebereiche einer Kunststoffoberfläche ermöglicht, industriell einfach anwendbar ist und ohne metallische Partikel auskommt. Diese Aufgabe wird durch die Merkmale der Patentansprüche 1 und 9 gelöst.

Das erfindungsgemäße Verfahren zur Herstellung einer dichten Verbindung zwischen einem mehrschichtigen Kunststoffmaterial und einem Filtermedium beruht auf dem Gedanken, dass unterschiedliche Oberflächen eine unterschiedliche Wärmeabsorptionsfähigkeit aufweisen. Beispielsweise sind diese durch mehrteilige Werkzeuge im Spritzgussverfahren gefertigt. Die unterschiedlichen Oberflächen können jedoch auch durch Kleben oder Aufsprühen hergestellt werden. Die zu fügende Oberfläche ist beispielsweise die Oberfläche einer Kunststoffendscheibe des Filtermediums. Diese wird durch die thermische Wirkung der Infrarotstrahlung auf geschmolzen und anschließend mit der Stirnseite des Filtermediums zusammengefügt. Die Erfindung nutzt die physikalische Eigenschaft, dass Strahlungswärme an verschiedenen Materialien und Oberflächen unterschiedlich absorbiert wird. Somit kann eine Schmelzzone der zu fügenden Oberfläche selektiert werden. Die Schmel zzone muss keine geschlossene Oberfläche bilden und kann auch nur einen kleinen Teilbereich der Oberfläche darstellen. Insbesondere bei Endscheiben für Filterelemente ist dies meist ein ringförmiger Teilbereich. Durch die gezielte, selektive Anschmelzung der Schmelzzone können Elemente der Kunststoffendscheibe von der Anschmelzung ausgenommen werden, obwohl sie räumlich näher an der Wärmequelle sind als die Schmelzzone. Dies ermöglicht die Anordnung von Funktionsteilen auf der Kunststoffendscheibe, welche nach dem Schmelzvorgang in das Filterelement hineinragen oder seitlich über das Filtermedium überstehen können. Im Vergleich zu bisherigen Infrarot-Anschmelzverfahren kann auf eine Abschirmung gefährdeter Kunststoffteile durch Blenden verzichtet werden. Weiterhin bietet sich die Möglichkeit, das Infrarot-Anschmelzverfahren außer auf planen Flächen auch auf gewölbten oder verwinkelten Geometrien anzuwenden. Da auch hierbei die Schmelzzone selektiv am Kunststoffteil bestimmt wird, wird die Erhitzung gefährdeter Teile minimiert. Durch die selektive Erwär mung wird weniger Wärmeenergie in das Kunststoffteil geleitet, wodurch eine beschleunigte Aufheizung erfolgt. Entsprechend der geringeren Wärmemenge beschleunigt sich ebenso der Abkühlvorgang, und es wird eine kürzere Taktzeit des Schmelzvorganges ermöglicht.

Durch das erfindungsgemäße Verfahren wird es vorteilhaft erlaubt, die Aufschmelzzone gezielt der Stirnfläche eines Filtermediums anzupassen. Ein wirtschaftlicher Vorteil dieser Lösung ergibt sich durch die mögliche Verwendung von Infrarotstrahlern, welche eine vergleichsweise einfache Handhabung und Abstimmung gegenüber der zu schmelzenden Oberfläche erlauben.

Eine vorteilhafte Ausführungsform der Erfindung ergibt sich dadurch, dass die unterschiedlichen Oberflächen Schichten mit unterschiedlichen Farbpigmentierungen aufweisen. Hierbei wird der physikalische Effekt genutzt, nach dem dunkle Farbpigmente mehr Strahlungsenergie absorbieren als helle Farben. Bei der Anwendung an einer Endscheibe für ein Filterelement bietet es sich an, als Schmelzzone dunkel gefärbte Materialschicht zu verwenden und die übrigen Zonen als helle oder naturfarbene Schicht zu belassen. Als für die Schmelzschicht zu verwendende Werkstoffe sind beispielsweise die Produkte Zytel 73 G15 BK der Fa. Dupont, VE30CW der Fa. Leuna oder Grilon BG30S der Fa. EMS verwendbar. Für die hellere Trägerschicht dagegen eignen sich beispielsweise die Produkte Zytel 73 00T der Fa. Dupont, H3KC der Fa. Leuna oder BKV 25LT der Fa. Bayer. Vorteilhaft hierbei ist es, dass die übrigen Materialeigenschaften der verschiedenen Kunststoffe identisch bleiben können. Weiterhin sind keine Zusätze in das Kunststoffmaterial notwendig. Es kann im Gegenteil auf den Zusatz der Farbpigmentierung, der nicht zu schmelzenden Kunststoffschicht verzichtet werden. Alternativ können für die unterschiedlichen Kunststoffschichten auch Farbpigmente verwendet werden, die für das menschliche Auge nicht unterscheidbar sind, aber die Strahlungswärme unter schiedlich absorbieren. Die unterschiedliche Wärmeabsorption bei gleich sichtbarer äuβerlicher Farbe, erlaubt es eine einheitliche Farbe auf den sichtbaren Oberflächen herzustellen.

In einer weitere n positiven Variante des Verfahrens wird die anzuschmelzende Kunststoffoberfläche aus Materialien mit unterschiedlichen Schmelzpunkten gebildet. Zusätzlich zur verbesserten Wärmeadsorption kann der Kunststoff in der Schmelzzone einen niedrigeren Schmelzpunkt aufweisen. Dadurch wird der Aufschmelzvorgang der Schmelzzone weiter beschleunigt. Wärmeempfindliche Konturen oder Elemente werden durch die zeitlich verkürzte Infrarotbestrahlung vorteilhaft vor thermischer Beschädigung geschützt.

Eine weitere vorteilhafte Ausgestaltung einer Variante bietet sich durch das Aufbringen einer feinen, schallplattenähnlichen Rillung auf der Oberfläche der Schmelzzone an. Diese Rillung verbessert aufgrund ihrer größeren Oberfläche den Wärmeübergang und verstärkt somit das selektive Anschmelzen der Schmelzzone. Die dadurch bewirkte gezielte Beschleunigung des Schmelzvorganges trägt weiter zur Schonung von nicht aufzuschmelzenden Funktionsteilen bei und verkürzt weiterhin die Taktzeit des Schmelzvorganges

Eine weitere vorteilhafte Ausgestaltung der Erfindung ergibt sich durch die zickzackförmige Gestaltung des Filtermediums. Durch die im Stand der Technik bekannte zickzackförmige Faltung des Filtermediums wird eine große Filteroberfläche auf einem relativ kleinen Filtervolumen untergebracht, wodurch sich auch die erforderliche Schmelzzone, welche von der Endscheibe verschlossen werden muss, auf einen schmalen umlaufenden Ring reduziert. Dadurch kann die Schmelzfläche im Verhältnis zur Filteroberfläche reduziert werden.

Gemäß einer weiteren Ausgestaltung der Erfindung kann das Filterelement rund ausgestaltet sein oder als so genanntes Wickelelement mit wechselseitig verschlossenen Kanälen gebildet werden. Auch hierbei bietet sich der Vorteil, die Filterschicht in einer geringen umlaufenden Schmelzzone mit der Kunststoffendscheibe zu verbinden.

Eine weitere vorteilhafte Verwendung des Erfindungsgedankens ermöglicht sich durch die Auswahl eines Filtermediums, welches einen höheren Schmelzpunkt als das verwendete Kunststoffmaterial aufweist. Durch die Verwendung des Filtermediums mit erhöhtem Schmelzpunkt oder gar ohne einen Schmelzpunkt wird eine Beschädigung des Filtermediums durch den Schmelzvorgang vermieden.

Eine weitere vorteilhafte Verwendung des Erfindungsgedankens ermöglicht sich dadurch, dass die stirnseitigen Kanten des Filtermediums durch das Anschmelzen des Kunststoffmaterials verschlossen werden. Bei dem Verschmelzen der stirnseitigen Kanten durch das Kunststoffmaterial kann auf eine zusätzliche Versiegelung der stirnseitigen Kanten verzichtet werden. Somit erfolgt das Zusammenfügen zwischen Filtermedium und Endscheibe sowie das Abdichten des stirnseitigen Filtermaterials in einem Arbeitsgang.

Das erfindungsgemäße Filterelement besteht aus einem ringförmig angeordneten Filtermedium, welches beidseitig von einer Kunststoffendscheibe bedeckt ist, wobei das Filtermedium an seinen Stirnseiten dichtend in die Kunststoffendscheiben eingeschmolzen ist. Die mehrschichtigen Kunststoffendscheiben sind aus Materialien ausgeführt, welche an ihren aufzuschmelzenden Flächen unterschiedliche Wärmeabsorptionsfähigkeiten aufweisen. Hierdurch ist es erlaubt, die Kunststoffendscheiben vor dem Schmelzprozess durch Infrarotstrahlung anzuschmelzen und mit dem Filtermedium zu verbinden. Vorteilhaft an diesem Filterelement ist die mögliche Anordnung von Funktionselementen innerhalb des Filterelementes, wobei es hier ermöglicht wird, als Funktionselemente beispielsweise eine innen liegende Dichtung oder ein Ventil anzuordnen. Funktionselemente können somit auf der zu schmelzenden Seite der Endscheiben angeordnet werden. An den Endscheiben vorhandene Funktionselemente können das Filtermedium auch überragen, wodurch beispielsweise die Anordnung von Bügeln, Flanschen oder Halterungen an der seitlich überstehenden Endscheibe ermöglicht wird.

Diese und weitere Merkmale der Erfindung gehen außer aus den Ansprüchen auch aus der Beschreibung und der Zeichnung hervor, wobei die einzelnen Merkmale jeweils für sich allein oder zu mehreren verwirklicht sein können.

### Zeichnungen

Ausführungsbeispiele der Erfindung werden in den Zeichnungen anhand von schematischen Darstellungen beschrieben. Hierbei zeigen
- Figur 1: ein Filterelement im Vollschnitt und
- Figur 2: das Filterelement in der Draufsicht als Schnittdarstellung gemäß Figur 1, A-A.

### Beschreibung der Ausführungsbeispiele

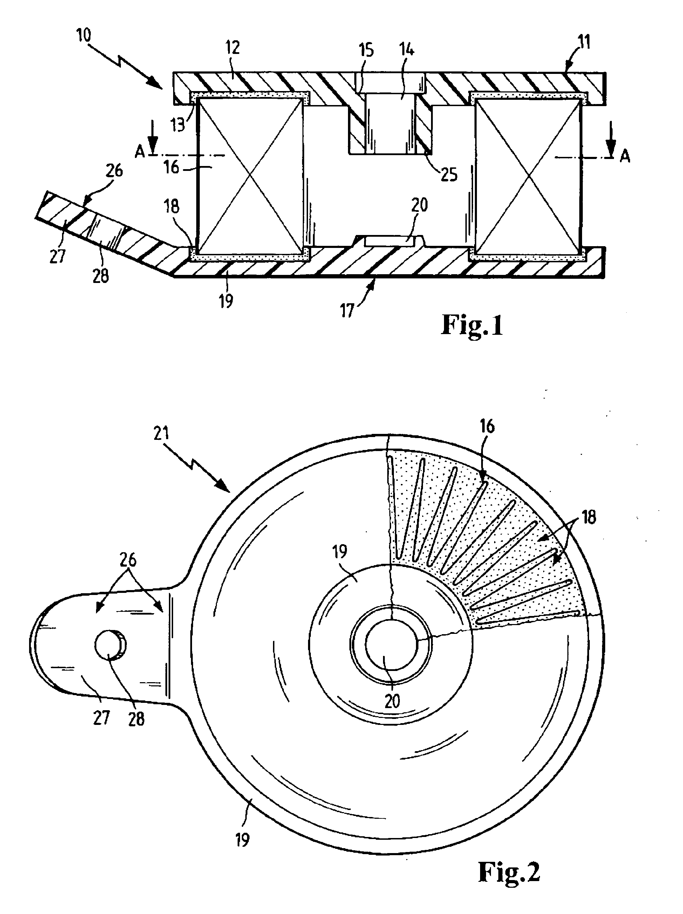

Das in Figur 1 dargestellte Filterelement 10 beinhaltet zwischen einer offenen Endscheibe 11 und einer geschlossenen Endscheibe 17 ein eingeschweißtes Filtermedium 16. Die offene Endscheibe 11 wird aus einer zwei-komponentigen Kunststoffscheibe gebildet. Eine Komponente der offenen Endscheibe 11 wird von der oberen Trägerschicht 12 gebildet, die zweite Komponente wird von der oberen Schmelzschicht 13 gebildet. Die obere Trägerschicht 12 überragt das gesamte Filtermedium 16, wogegen die obere Schmelzschicht 13 nur die Zone bedeckt, an welcher das Filtermedium 16 angeschweißt ist. Die zweite Kunststoffkomponente, welche die obere Schmelzschicht 13 bildet, besteht aus einem Material, welches eine bessere Wärmeabsorptionsfähigkeit aufweist. Mittig in der offenen Endscheibe 11 ist eine Aufnahmemuffe 25 angeordnet, welche in die Innenseite des Filtermediums 16 ragt. Diese Aufnahmemuffe 25 dient zur Aufnahme eines nicht dargestellten Anschlussrohres, welches durch die Funktionsöffnung 14 in das Filterelement 10 eingeschoben wird. Der in der Funktionsöffnung 14 vorhandene Absatz 15 ermöglicht die Aufnahme eines nicht dargestellten Dichtungselementes, welches zur Abdichtung eines nicht dargestellten Anschlussstutzens dient. Die geschlossene Endscheibe 17 besteht aus einer unteren Trägerschicht 19 und einer unteren Schmelzschicht 18. Die geschlossene Endscheibe 17 überragt das Filtermedium 16 seitlich durch den überragenden Bereich 26. Der überragende Bereich 26 ist zum Filtermedium 16 hin angewinkelt und weist eine Bohrung 28 auf. Durch die Anordnung der Bohrung 28 im länglich angeordneten überragenden Bereich 26 entsteht der Bügel 27. Weiterhin ist an der geschlossenen Endscheibe 17 eine Aufnahmekontur 20 vorhanden, welche das nicht dargestellte Anschlussrohr nach Einbringen in das Filterelement 10 gegen seitliche Verschiebung absichert.

In Figur 2 ist das Filterelement 10 im Vollschnitt gemäß der Figur 1 im Schnitt A-A dargestellt. Der Figur 1 entsprechende Bauteile sind mit den gleichen Bezugszeichen versehen. Die einzelne Endscheibe 21 ist aus einer zwei-komponentigen Kunststoffscheibe gebildet, wobei eine Komponente aus der unteren Trägerschicht 19 gebildet wird und die zweite Komponente aus der unteren Schmelzschicht 18. Die im Zentrum vorhandene Aufnahmekontur 20 dient zur Aufnahme eines nicht dargestellten Anschlussrohres. Die untere Trägerschicht 19 übersteht in dieser Variante die Grundfläche des eingeschweißten Filtermediums 16. Die Ausgestaltung des zickzackförmig gestalteten Filtermediums 16 und die untere Schmelzschicht 18 sind nur in einem Teilsegment angedeutet.

## Patentansprüche

1. Verfahren zur Herstellung einer dichten Verbindung zwischen einem thermisch schmelzbaren, mehrschichtigen Kunststoffmaterial (11) und einem fluiddurchlässigen Filtermedium (16), wobei der Kunststoff (11) durch Infrarotstrahlung erwärmt wird, **dadurch gekennzeichnet, dass** die Verbindung durch Anschmelzen einer Schicht (12) des Kunststoffmaterials (11), welche gegenüber den weiteren Schichten (13) eine unterschiedliche Wärmeabsorptionsfähigkeit aufweist, hergestellt wird.

2. Verfahren nach Anspruch 1, **dadurch gekennzeichnet, dass** die Wärmeabsorptionsfähigkeit der einzelnen Schichten (12, 13) des Kunststoffmaterials(11) durch die unterschiedliche Farbpigmentierung bestimmt wird.

3. Verfahren nach einem der vorhergehenden Ansprüche, **dadurch gekennzeichnet, dass** die einzelnen Schichten (12, 13) des Kunststoffmaterials(11) unterschiedliche Schmelzpunkte aufweisen.

4. Verfahren nach einem der vorhergehenden Ansprüche, **dadurch gekennzeichnet, dass** die zu schmelzende Schicht (13) zur Verbesserung des Wärmeüberganges eine Rillung aufweist.

5. Verfahren nach einem der vorhergehenden Ansprüche, **dadurch gekennzeichnet, dass** das Filtermedium (16) zickzackförmig gefaltet ist.

6. Verfahren einem der vorhergehenden Ansprüche 1 bis 4, **dadurch gekennzeichnet, dass** das Filtermedium (16) gerollt ist.

7. Verfahren nach einem der vorhergehenden Ansprüche, **dadurch gekennzeichnet, dass** das Filtermedium (16) nicht schmelzbar ist.

8. Verfahren nach einem der vorhergehenden Ansprüche, **dadurch gekennzeichnet, dass** die stirnseitigen Kanten des Filtermediums (16) durch das Anschmelzen des Kunststoffmaterials(11) verschlossen werden.

9. Filterelement (10) bestehend aus mindestens einer mehrschichtigen Kunststoffendscheibe (11), welche eine Dichtkontur bildet und einem hohlförmig angeordneten Filtermedium (16), welches mit seinen Stirnseiten mit mindestens einer mehrschichtigen Kunststoffendscheibe (11) dichtend verschlossen ist, **dadurch gekennzeichnet, dass** eine Geometrie auf der Innenseite des Filtermediums (16) angeordnet ist, wobei die mehrschichtige Kunststoffendscheibe (11) aus Schichten (12, 13) mit unterschiedlichen Pigmentierungen gebildet ist und eine selektive Erwärmung z. B. durch Infrarotstrahlung ermöglicht.

10. Filterelement (10) nach Anspruch 9, **dadurch gekennzeichnet, dass** mindestens eine Kunststoffendscheibe (11) das Filtermedium seitlich überragt, wobei an diesem seitlich überragenden Bereich Funktionsgeometrien (27) angeordnet sind.

## Claims

1. Method for manufacturing a tight connection between a thermally meltable multilayer synthetic material (11) and a fluid-permeable filter medium (16), the synthetic material (11) being heated up by infrared radiation, **characterized in that** the connection is manufactured by melting a layer (12) of the synthetic material (11) which features a different heat absorption capability compared with the other layers (13).

2. Method according to claim 1, **characterized in that** the heat absorption capability of the individual layers (12, 13) of the synthetic material (11) is determined by the different color pigmentation.

3. Method according to one of the above claims, **characterized in that** the individual layers (12, 13) of the synthetic material (11) feature different melting points.

4. Method according to one of the above claims, **characterized in that** the layer (13) to be melted features grooves for enhancing the heat transfer.

5. Method according to one of the above claims, **characterized in that** the filter medium (16) is zigzag-folded.

6. Method according to one of the above claims 1 to 4, **characterized in that** the filter medium (16) is wound up.

7. Method according to one of the above claims, **characterized in that** the filter medium (16) is unmeltable.

8. Method according to one of the above claims, **characterized in that** the frontal edges of the filter medium (16) are closed by melting the synthetic material (11).

9. Filter element (10) consisting of at least one multilayer plastic end plate (11) which forms a sealing contour and a concavely disposed filter medium (16) which is with its end faces sealingly closed with at least one multilayer plastic end plate (11), **characterized in that** a geometry is disposed on the interior side of the filter medium (16), the multilayer plastic end plate (11) being formed of layers (12, 13) with different pigmentations and enabling a selective heating, for example through infrared radiation.

10. Filter element (10) according to claim 9, **characterized in that** at least one plastic end plate (11) protrudes the filter medium laterally, functional geometries (27) being disposed at this laterally protruding area.

## Revendications

1. Procédé destiné à la fabrication d'une liaison étanche entre une matière plastique (11) thermofusible et multicouches et un milieu filtrant (16) perméable aux fluides, le plastique (11) étant chauffé par rayonnement infrarouge, **caractérisé en ce que** la liaison est générée par fusion d'une couche (12) de la matière plastique (11) qui présente une capacité d'absorption de la chaleur différente des autres couches (13).

2. Procédé selon la revendication 1, **caractérisé en ce que** la capacité d'absorption de la chaleur des différentes couches (12, 13) de la matière plastique (11) est déterminée par la pigmentation colorée différente.

3. Procédé selon l'une des revendications précédentes, **caractérisé en ce que** les différentes couches (12, 13) de la matière plastique (11) présentent des points de fusion différents.

4. Procédé selon l'une des revendications précédentes, **caractérisé en ce que** la couche devant fondre (13) est dotée de rainures en vue d'améliorer le transfert de chaleur.

5. Procédé selon l'une des revendications précédentes, **caractérisé en ce que** le milieu filtrant (16) est plié en accordéon.

6. Procédé selon l'une des revendications 1 à 4 précédentes, **caractérisé en ce que** le milieu filtrant (16) est enroulé.

7. Procédé selon l'une des revendications précédentes, **caractérisé en ce que** le milieu filtrant (16) n'est pas fusible.

8. Procédé selon l'une des revendications précédentes, **caractérisé en ce que** les arêtes frontales du milieu filtrant (16) sont obturées par fusion de la matière plastique (11).

9. Elément filtrant (10) composé d'au moins un disque d'extrémité (11) en plastique et multicouches qui forme un contour d'étanchéité et d'un milieu filtrant (16) disposé en forme de creux et dont les faces frontales sont obturées de manière étanche avec au moins un disque d'extrémité (11) en plastique et multicouches, **caractérisé en ce qu'**une géométrie est disposée sur la face intérieure du milieu filtrant (16), le disque d'extrémité (11) en plastique et multicouches étant constitué de couches (12, 13) avec des pigmentations différentes et autorisant un échauffement sélectif, p. ex. par un rayonnement infrarouge.

10. Elément filtrant (10) selon la revendication 9, **caractérisé en ce qu'**au moins un disque d'extrémité (11) en plastique dépasse latéralement du milieu filtrant, des géométries fonctionnelles (27) étant disposées sur cette zone de dépassement latérale.
